(19) Europäisches Patentamt
European Patent Office
Office européen des brevets

(11) **EP 3 218 102 B1**

(12) **FASCICULE DE BREVET EUROPEEN**

(45) Date de publication et mention de la délivrance du brevet:
**23.12.2020 Bulletin 2020/52**

(21) Numéro de dépôt: **15805577.2**

(22) Date de dépôt: **05.11.2015**

(51) Int Cl.:
*B01J 20/28* (2006.01)        *B01J 20/18* (2006.01)
*B01J 20/30* (2006.01)        *B01D 15/00* (2006.01)
*B01D 53/047* (2006.01)       *B01D 53/04* (2006.01)
*B01D 15/18* (2006.01)        *B01D 53/02* (2006.01)

(86) Numéro de dépôt international:
**PCT/FR2015/052990**

(87) Numéro de publication internationale:
**WO 2016/075393 (19.05.2016 Gazette 2016/20)**

(54) **ADSORBANT ZÉOLITHIQUE À BASE DE ZÉOLITHE MÉSOPOREUSE**

ZEOLITHADSORPTIONSMITTEL AUS EINEM MESOPORÖSEN ZEOLITH

ZEOLITE ADSORBENT MADE FROM A MESOPOROUS ZEOLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2014 FR 1460916**

(43) Date de publication de la demande:
**20.09.2017 Bulletin 2017/38**

(73) Titulaire: **ARKEMA FRANCE**
**92700 Colombes (FR)**

(72) Inventeurs:
• **BOUVIER, Ludivine**
**64300 Orthez (FR)**
• **LUTZ, Cécile**
**64290 Gan (FR)**
• **SZENDROVICS, Sylvie**
**64370 Arthez-de-Bearn (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-2014/090771     WO-A2-2008/152319**

**WO-A2-2009/081023**

• **ALEXANDRA INAYAT ET AL: "Assemblies of Mesoporous FAU-Type Zeolite Nanosheets", ANGEWANDTE CHEMIE INTERNATIONAL EDITION, vol. 51, no. 8, 20 février 2012 (2012-02-20), pages 1962-1965, XP055116858, ISSN: 1433-7851, DOI: 10.1002/anie.201105738 cité dans la demande**
• **WANG D ET AL: "Shape-controlled synthesis of monolithic ZSM-5 zeolite with hierarchical structure and mechanical stability", MICROPOROUS AND MESOPOROUS MATERIALS, ELSEVIER SCIENCE PUBLISHING, NEW YORK, US, vol. 132, no. 3, 27 mars 2010 (2010-03-27) , pages 428-434, XP027049585, ISSN: 1387-1811 [extrait le 2010-05-13]**
• **DANNY VERBOEKEND ET AL: "Hierarchical FAU- and LTA-Type Zeolites by Post-Synthetic Design: A New Generation of Highly Efficient Base Catalysts", ADVANCED FUNCTIONAL MATERIALS, vol. 23, no. 15, 19 avril 2013 (2013-04-19), pages 1923-1934, XP055117151, ISSN: 1616-301X, DOI: 10.1002/adfm.201202320 cité dans la demande**
• **LAURENT GUEUDRÉ ET AL: "Superior Mass Transfer Properties of Technical Zeolite Bodies with Hierarchical Porosity", ADVANCED FUNCTIONAL MATERIALS, vol. 24, no. 2, 1 janvier 2014 (2014-01-01), pages 209-219, XP055198724, ISSN: 1616-301X, DOI: 10.1002/adfm.201203557**

**EP 3 218 102 B1**

**Description**

La présente invention concerne le domaine des adsorbants zéolithiques comprenant au moins une zéolithe mésoporeuse ainsi que le procédé de préparation desdits adsorbants zéolithiques.

Les solides mésoporeux inorganiques sont bien connus et leur synthèse, notamment par effet structurant de tensioactif, a été décrite pour la première fois dans le brevet US3556725.

Ces solides mésoporeux (ou encore zéolithes mésoporeuses, ou encore zéolithes à structure mésoporeuse) présentent une grande utilité dans de nombreux domaines industriels, à la fois comme catalyseurs, supports de catalyseurs mais aussi comme adsorbants, dans la mesure où leur porosité importante exprimée en termes de rapport [surface/volume] permet aux molécules avec lesquelles elles sont mises en contact d'accéder facilement au cœur des particules et de réagir sur une surface importante, exaltant ainsi les propriétés catalytiques et/ou adsorbantes de ces matériaux.

La société Mobil, au cours des années '90, a entrepris de nombreux travaux relatifs aux solides inorganiques mésoporeux, notamment relatifs à des composés (alumino)siliciques, et plus particulièrement le composé MCM 41 (pour Mobil Composition Of Matter 41) dont on trouve décrit un procédé de synthèse dans Nature, (1992), vol. 359, pp.710-712, et qui ont fait l'objet de nombreux brevets et articles scientifiques ultérieurs.

Aussi, ces matériaux mésoporeux sont-ils maintenant bien connus à l'échelle du laboratoire, tant au niveau de leur structure et de leur distribution poreuse, de leurs modes de synthèse, que de leurs applications possibles en tant que catalyseurs et/ou comme adsorbants. Cependant, ces matériaux inorganiques mésoporeux présentent comme inconvénient majeur d'être instables thermiquement en présence d'eau ce qui limite grandement les applications industrielles.

La recherche de solides inorganiques mésoporeux a conduit au développement de zéolithes mésoporeuses obtenues par divers procédés, comme par exemple décrit dans l'article de Feng-Shou Xiao et al. (Hierarchically Structured Porous Materials, (2012), 435-455, Wiley-VCH Verlag GmbH & Co. KGaA: Weinheim, Germany 978-3-527-32788-1).

Une des voies envisagées est celle des post-traitements de cristaux zéolithiques, ces post-traitements pouvant être par exemple des traitements à la vapeur d'eau, des traitements acides et/ou basiques qui conduisent à une désalumination, des traitements complémentaires pour éliminer les espèces extra-réseaux, tous ces post-traitements pouvant chacun ou ensemble être opérés une ou plusieurs fois, simultanément ou consécutivement.

Le brevet US8486369, les demandes de brevets US20130183229, US20130183231, ainsi que la demande WO2013106816, sont des exemples qui illustrent de tels procédés de préparation de zéolithe à structure mésoporeuse par divers post-traitements successifs à la vapeur puis avec des acides et en présence de surfactant.

Si de tels procédés tendent à créer des volumes poreux importants, on observe en contrepartie qu'ils dégradent fortement la cristallinité de la poudre de zéolithe initiale, jusqu'à près de 50% dans certains cas. Il est par ailleurs nécessaire de recourir à des traitements complémentaires de cautérisation pour stabiliser la charpente zéolithique, éliminer les atomes d'aluminium extra-réseaux afin de rendre possible les traitements thermiques ultérieurs, notamment de calcination, requise pour la plupart des utilisations des matériaux zéolithiques en tant que catalyseurs ou adsorbants.

De tels procédés permettant de créer une certaine mésoporosité au sein des solides zéolithiques sont donc très lourds à mettre en oeuvre du fait de la succession de nombreuses étapes, peu économiques et donc difficilement industrialisables. En outre, la multitude d'étapes tend à fragiliser la structure zéolithique et par conséquent réduire les propriétés intrinsèques de ces zéolithes.

C'est pourquoi on privilégie aujourd'hui les synthèses de solides zéolithiques mésoporeux, par voie directe, et sans post-traitement connu en tant que tel dans l'art antérieur. Diverses publications montrent la faisabilité de synthèse au laboratoire de zéolithes mésoporeuses, et à titre d'exemples, on note en particulier les demandes WO2007043731 et EP2592049, où la synthèse de zéolithes mésoporeuses est réalisée à base de surfactant, et notamment celui de type TPOAC (chlorure de [3-(triméthoxysilyl)-propyl]octadécyldiméthylammonium).

D'autres publications encore illustrent de tels travaux, comme par exemple ceux de R. Ryoo (Nature Materials, 5, (2006), 718 sqq.) qui décrivent une synthèse de LTA avec mésopores, ou encore ceux de A. Inayat et coll. (Angew. Chem. Int. Ed., (2012), 51, 1962-1965) qui décrivent la synthèse de FAU (X) mésoporeuse en utilisant le TPHAC (chlorure de [3-(triméthoxysilyl)propyl]hexadécyldiméthylammonium), en tant qu'agent structurant.

Il n'existe cependant aujourd'hui aucune description concernant la préparation d'agglomérés à base de zéolithes mésoporeuses, agglomérés dans lesquels les propriétés spécifiques de ces zéolithes mésoporeuses, en particulier leur microporosité, sont conservées. De ce fait, il reste qu'aujourd'hui aucune application industrielle, notamment dans le domaine de la séparation des liquides et/ou des gaz, de l'échange ionique ou dans le domaine de la catalyse, ne met en oeuvre de tels agglomérés zéolithiques à forte microporosité comprenant au moins une zéolithe mésoporeuse et dont la cinétique de transfert est au moins comparable à celle attendue du fait de la présence de la mésoporosité. D. Wang décrit des monolithes de zéolithes ZSM-5 en colonnes, avec une structure hiérarchique et une excellente résistance mécanique, qui sont préparés par une méthode de transformation hydrothermale (MICROPOROUS AND MESOPOROUS MATERIALS, (2010), 132, no.3, 428-434).

Il reste donc aujourd'hui un besoin pour des adsorbants zéolithiques présentant une forte microporosité, c'est-à-dire une grande capacité d'adsorption, mais aussi qui permettent des transferts optimisés, notamment grâce à la présence de mésopores. Ainsi le besoin actuel des industriels va-t-il aujourd'hui vers des adsorbants zéolithiques qui allient à la fois une capacité d'adsorption et une cinétique de transfert optimales.

Il doit en outre être rappelé que l'industrie, et notamment dans les domaines d'application évoqués ci-dessus, utilise des adsorbants zéolithiques sous forme d'agglomérés. En effet, les zéolites synthétiques sont le plus souvent obtenues à l'issue d'un processus de nucléation et de cristallisation de gels de silico-aluminates dont la taille des cristallites produites est de l'ordre du micromètre à quelques micromètres : on parle alors de cristaux de zéolithe ou de zéolithe sous forme de poudre.

Ces poudres sont d'un emploi industriel malaisé car elles sont difficiles à manipuler en raison de leur mauvaise coulabilité, elles génèrent des pertes de charge importantes, ainsi qu'une mauvaise répartition des flux dans les lits, notamment dans les procédés dynamiques qui impliquent des fluides en écoulement.

On privilégie par conséquent les formes agglomérées de ces poudres, que l'on appelle plus couramment agglomérés zéolithiques ou adsorbants zéolithiques agglomérés et qui peuvent être sous forme de grains, de filés, d'extrudés ou autres agglomérats, ces dites formes pouvant être obtenues par extrusion, pastillage, atomisation ou autres techniques d'agglomération bien connues de l'homme du métier. Ces agglomérats ne présentent pas les inconvénients précités inhérents aux matières pulvérulentes.

Ces agglomérés sont en général constitués de cristaux de zéolithe(s) et d'un liant, le plus souvent inerte vis-à-vis de l'application à laquelle est destinée la zéolithe, ledit liant étant destiné à assurer la cohésion des cristaux de zéolithe(s) entre eux et de leur conférer la résistance mécanique suffisante et nécessaire pour l'application industrielle envisagée.

La présente invention a ainsi pour objectif de proposer un adsorbant zéolithique sous forme d'aggloméré comprenant au moins une zéolithe mésoporeuse alliant à la fois capacité d'adsorption et résistance mécanique appropriées et adaptées à l'application auquel il est destiné.

Selon un aspect préféré la présente invention a encore pour objectif de proposer un adsorbant zéolithique sous forme d'aggloméré comprenant au moins une zéolithe mésoporeuse alliant à la fois capacité d'adsorption et cinétique de transfert optimales, tout en offrant une résistance mécanique appropriée et adaptée à l'application auquel il est destiné.

Un autre objectif encore consiste en la fourniture d'un procédé de préparation d'un tel adsorbant zéolithique, ledit procédé étant facilement industrialisable, et amélioré en termes de coût et de durée, par rapport aux procédés de fabrication d'adsorbants connus de l'art antérieur, tout en évitant une dégradation des propriétés de la ou des zéolithe(s) mésoporeuse(s) présente(s) dans ledit matériau.

Plus particulièrement, un des objectifs de la présente invention consiste à proposer un adsorbant zéolithique aggloméré maintenant en son sein les propriétés de pureté, cristallinité et distribution poreuse de la ou des zéolithe(s) mésoporeuse(s) de départ et présentant par ailleurs une bonne résistance mécanique et une cristallinité et une cinétique de transfert optimisées, et permettre ainsi une utilisation industrielle aisée, efficace et encore améliorée, par exemple dans les domaines de la catalyse (catalyseurs ou support de catalyseurs), ou encore dans les procédés de séparation, d'adsorption ou d'échange ionique, dynamiques ou statiques, pour les fluides liquides ou gazeux.

D'autres objectifs encore apparaîtront à la lumière de la description de la présente invention qui suit.

La Demanderesse a découvert qu'il est possible d'atteindre, en totalité ou au moins en partie, les objectifs précités et de fabriquer de manière économique et optimisée un adsorbant zéolithique à fort taux de cristallinité, et combinant à la fois une capacité d'adsorption optimale et une cinétique de transfert optimale. L'adsorbant zéolithique selon l'invention présente, outre un haut niveau de cristallinité, une densité et des propriétés mécaniques suffisantes pour une utilisation dans les procédés d'adsorption et les procédés d'échange ionique en dynamique ou en statique.

Sauf indication contraire dans la présente description, les proportions indiquées sont des proportions pondérales, comptées pour les constituants solides en équivalents calcinés, sur la base de calcination réalisée à 950°C pendant 1 heure.

Ainsi, et selon un premier aspect, la présente invention concerne un adsorbant zéolithique possédant les caractéristiques suivantes :

- la surface externe, mesurée par adsorption d'azote, est comprise entre 20 $m^2.g^{-1}$, et 70 $m^2.g^{-1}$, de préférence entre 20 $m^2.g^{-1}$ et 60 $m^2.g^{-1}$, de préférence encore entre 30 $m^2.g^{-1}$ et 60 $m^2.g^{-1}$, mieux encore entre 40 $m^2.g^{-1}$, et 60 $m^2.g^{-1}$, bornes incluses,
- le volume mésoporeux ($V_{méso}$), est tel que $0 < V_{méso} \leq 0,20$ $cm^3.g^{-1}$, de préférence $0 < V_{méso} \leq 0,10$ $cm^3.g^{-1}$, mesuré par adsorption d'azote,
- la teneur en phase non zéolithique (PNZ) est telle que $0 < PNZ \leq 6\%$, de préférence $0,5\% \leq PNZ \leq 6\%$, mieux encore, $1\% \leq PNZ \leq 6\%$, de préférence encore $2\% \leq PNZ \leq 6\%$, avantageusement $3\% \leq PNZ \leq 6\%$, en poids par rapport au poids total dudit adsorbant, et
- au moins une des dimensions est supérieure ou égale à 30 $\mu$m, de préférence supérieure ou égale à 50 $\mu$m, de

préférence encore supérieure ou égale à 80 $\mu$m,

chacune des mesures étant effectuée sur l'adsorbant zéolithique dans sa forme échangée au sodium.

La surface externe dudit adsorbant zéolithique est mesurée par la méthode du t-plot, telle que définie plus loin.

Selon un mode de réalisation de l'invention, les sites cationiques échangeables de l'adsorbant zéolithique sont occupés par des ions sodium, et/ou par tout ion connu de l'homme du métier et qui peut venir occuper un site cationique échangeable d'une zéolithique, et par exemple les ions des groupes IA, IIA, IIIA, IIIB du tableau périodique des éléments, les ions trivalents des éléments de la série des lanthanides, l'ion zinc (II), l'ion cuivre (II), l'ion chrome (III), l'ion fer (III), l'ion ammonium, l'ion hydronium ou les mélanges de deux ou plusieurs d'entre eux, en toutes proportions.

On préfère les ions du groupe IA et tout particulièrement les ions sodium, potassium et lithium; mais aussi les ions du groupe IIA, et en particulier les ions magnésium, calcium, strontium et baryum. Parmi les ions des groupes IIIA et IIB, on préfère les ions aluminium, scandium, gallium, indium et yttrium, et parmi les ions trivalents des éléments de la série des lanthanides, on préfère les ions lanthane, cérium, praséodyme et néodyme.

Selon un aspect tout particulièrement préféré, les sites cationiques échangeables de l'adsorbant zéolithique sont occupés par un ou plusieurs des ions choisis parmi hydronium, lithium, sodium, potassium, césium, magnésium, calcium, strontium, baryum, praséodyme, et lanthane, de préférence encore parmi cations hydronium, lithium, sodium, potassium, césium, calcium, baryum, et les mélanges de deux ou plusieurs d'entre eux en toutes proportions.

Selon un autre mode de réalisation préféré, l'adsorbant zéolithique de la présente invention présente en outre, sous sa forme échangée au sodium, une masse volumique apparente comprise entre 0,4 g.cm$^{-3}$ et 1,0 g.cm$^{-3}$, de préférence entre 0,5 g.cm$^{-3}$ et 0,9 g.cm$^{-3}$, bornes incluses. La masse volumique apparente est mesurée comme décrit dans la norme DIN 8948/7.6.

Dans la présente invention, on entend par adsorbant zéolithique dans sa forme échangée au sodium, un adsorbant zéolithique dont les sites cationiques sont occupés majoritairement par des ions sodium, c'est-à-dire que le taux d'échange en ions sodium est typiquement supérieur à 90%, de préférence supérieur à 95%. La mesure du taux d'échange est explicitée plus loin dans la description.

Ledit adsorbant zéolithique dans sa forme échangée au sodium peut être obtenu et de préférence est obtenu selon le protocole suivant : l'adsorbant zéolithique à échanger au sodium est introduit dans une solution de chlorure de sodium à 1 mole de NaCl par litre d'eau, à 90°C, pendant 3 heures, avec un rapport liquide sur solide de 10 mL.g$^{-1}$. L'opération est répétée n fois, n étant au moins égal à 1, de préférence au moins égal à 2, de préférence au moins égal à 3, de préférence encore au moins égal à 4.

Les solides issus des opérations d'échange n-1 et n sont successivement quatre fois lavés par immersion dans de l'eau à raison de 20 mL.g$^{-1}$ pour éliminer les excès de sel, puis séchés pendant 12 heures à 80°C sous air, avant d'être analysés par fluorescence X. Si le pourcentage massique en oxyde de sodium de l'adsorbant zéolithique, entre les opérations d'échange n-1 et n, est stable à $\pm$ 1%, ledit matériau adsorbant zéolithique est considéré comme « adsorbant zéolithique dans sa forme échangée sodium ». Le cas échéant, on procède à des échanges supplémentaires tels que décrit précédemment jusqu'à obtention d'une stabilité du pourcentage massique en oxyde de sodium de $\pm$ 1%.

On pourra notamment procéder à des échanges cationiques batch successifs, avec un large excès de chlorure de sodium, jusqu'à ce que la teneur massique en oxyde de sodium de l'adsorbant zéolithique, déterminé par analyse chimique de type fluorescence X, soit stable à $\pm$ 1%. Cette méthode de mesure est explicitée plus loin dans la description. En variante, l'adsorbant zéolithique peut déjà se trouver intrinsèquement dans sa forme échangée au sodium après l'étape de synthèse lorsque cette dernière est effectuée exclusivement en milieu alcalin sodique.

Dans la présente invention, les adsorbants comprennent au moins une zéolithe mésoporeuse, ladite zéolithe mésoporeuse étant avantageusement choisie parmi les zéolithes mésoporeuses de structure LTA, EMT et FAU de rapport atomique Si/Al compris entre 1 et 5, de préférence de structure LTA et FAU de rapport atomique Si/Al compris entre 1 et 1,4, bornes incluses, et de préférence parmi les zéolithes mésoporeuses de structure FAU de type X, MSX et LSX. Par zéolithe MSX (Médium Silica X), on entend une zéolithe de type FAU présentant un ratio atomique Si/Al compris entre environ 1,05 et environ 1,15, bornes incluses. Par zéolithe LSX (Low Silica X), on entend une zéolithe de type FAU présentant un ratio atomique Si/Al égal à environ 1.

Selon un mode de réalisation préféré, ladite au moins une zéolithe mésoporeuse présente dans l'adsorbant selon l'invention se présente sous forme de cristaux dont le diamètre moyen en nombre, mesuré au microscope électronique à balayage (MEB), est inférieur à 20 $\mu$m, de préférence compris entre 0,1 $\mu$m et 20 $\mu$m, de préférence compris entre 0,1 et 10 $\mu$m, de préférence compris entre 0,5 $\mu$m et 10 $\mu$m, de manière plus préférée compris entre 0,5 $\mu$m et 5 $\mu$m, bornes incluses.

Dans la présente invention, on entend par « zéolithe mésoporeuse », une zéolithe présentant une surface externe, définie par la méthode du t-plot décrite plus loin, comprise entre 40 m$^2$.g$^{-1}$ et 400 m$^2$.g$^{-1}$, de préférence entre 40 m$^2$.g$^{-1}$ et 250 m$^2$.g$^{-1}$, de préférence encore entre 40 m$^2$.g$^{-1}$ et 200 m$^2$.g$^{-1}$, bornes incluses. Par extension, au sens de la présente invention, une « zéolithe non mésoporeuse » est une zéolithe présentant éventuellement une surface externe, définie par la méthode du t-plot décrite plus loin, strictement inférieure à 40 m$^2$.g$^{-1}$.

Selon un mode de réalisation préféré, le procédé selon l'invention utilise un adsorbant zéolithique comprenant des cristaux mésoporeux de zéolithe choisie parmi les zéolithes LTA, EMT et FAU, et leurs mélanges de deux ou plusieurs d'entre elles en toutes proportions. De préférence, le procédé selon l'invention utilise un adsorbant zéolithique comprenant des cristaux mésoporeux de zéolithe FAU.

Les cristaux de la (ou des) zéolithe(s) mésoporeuse(s) comprise(s) dans l'adsorbant zéolithique de l'invention, seuls ou en mélange avec d'autres cristaux de zéolithes non mésoporeuses, sont agglomérés avec un liant zéolithisable et avec jusqu'à 5% d'additifs. Ledit liant zéolithisable est zéolithisé de sorte que la teneur en phase non zéolithique (PNZ) dans l'adsorbant est telle que $0 < PNZ \leq 6\%$, de préférence $1\% \leq PNZ \leq 6\%$, de préférence encore $2\% \leq PNZ \leq 6\%$, en poids par rapport au poids total dudit adsorbant, comme indiqué précédemment.

Le liant zéolithisable utilisé pour la préparation de l'adsorbant selon l'invention comprend, et de préférence consiste en, une argile zéolithisable seule ou en mélange avec une ou plusieurs autres argiles zéolithisables ou non zéolithisables, de préférence zéolithisables. Les argiles sont de préférence choisies parmi les kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions, et de préférence parmi les argiles zéolithisables comprenant les kaolins, kaolinites, nacrites, dickites, halloysites, illites et métakaolins, ainsi que les mélanges de deux ou plusieurs d'entre elles en toutes proportions.

Dans la présente invention, il doit être compris que le liant d'agglomération subit au moins une étape de zéolithisation (transformation du liant en zéolithe), cette zéolithisation dudit liant d'agglomération n'étant pas totale de sorte que l'adsorbant de l'invention comprend une quantité de liant zéolithisable non zéolithisé (c'est-à-dire non cristallin) de telle sorte que la teneur en phase non zéolithique (PNZ) dans l'adsorbant est telle que $0 < PNZ \leq 6\%$, de préférence $0,5\% \leq PNZ \leq 6\%$, mieux encore, $1\% \leq PNZ \leq 6\%$, de préférence encore $2\% \leq PNZ \leq 6\%$, avantageusement $3\% \leq PNZ \leq 6\%$, en poids par rapport au poids total dudit adsorbant, comme indiqué précédemment. Le liant d'agglomération non zéolithisé permet entre autre d'assurer la cohésion des cristaux de zéolithe(s) dans l'adsorbant zéolithique aggloméré de l'invention. Ce liant se distingue en outre des cristaux de zéolithe(s) en ce qu'il ne présente pas de structure cristalline zéolithique après calcination, raison pour laquelle le liant non zéolithisé (ou encore liant résiduel) est souvent qualifié d'inerte, et plus précisément inerte vis-à-vis de l'adsorption et/ou de l'échange ionique.

Selon un aspect particulièrement préféré, le liant présent dans l'adsorbant zéolithique aggloméré de l'invention est uniquement constitué d'une ou plusieurs argiles, et de préférence d'une seule argile, de préférence une seule argile zéolithisable.

L'adsorbant zéolithique selon la présente invention peut également comprendre un ou plusieurs autres composants, en quantité comprise entre 0 et 5%, de préférence entre 0 et 1%, de préférence encore entre 0 et 0,5%, bornes incluses, les pourcentages étant exprimés en poids par rapport au poids total dudit adsorbant zéolithique. Ce ou ces autre(s) composant(s) est(sont) généralement les résidus des additifs, et autres auxiliaires de synthèse dudit adsorbant zéolithique, et en particulier ceux qui seront décrits plus loin dans la présente description.

Des exemples de tels autres composants comprennent notamment les cendres des additifs après calcination, de la silice, et autres. En particulier, parmi les additifs éventuellement mis en œuvre lors de la fabrication de l'adsorbant du procédé selon l'invention, on peut citer les sources de silice de tout type connu de l'homme du métier spécialiste de la synthèse de zéolithes, et par exemple silice colloïdale, diatomées, perlites, cendres de calcination (« fly ash » en langue anglaise), sable, ou toute autre forme de source de silice solide.

Il doit être compris que ces autres composants sont généralement présents à l'état de résidus ou de traces et ne sont pas utilisés pour apporter un quelconque caractère liant ou cohésif aux matériaux zéolithiques agglomérés comprenant au moins une zéolithe mésoporeuse de l'invention.

L'adsorbant de la présente invention peut se présenter sous diverses formes telles que celles bien connues de l'homme du métier spécialiste de l'adsorption, et par exemple et de manière non limitative, l'adsorbant zéolithique de l'invention peut se présenter sous forme de billes, de filés, d'extrudés, mais aussi de membranes, films et autres.

L'adsorbant zéolithique selon la présente invention présente :

- une résistance à l'écrasement en lit (REL) mesurée selon la norme ASTM 7084-04 comprise entre 1,0 MPa et 3,5 MPa, de préférence entre 1,2 MPa et 3,5 MPa, de préférence encore entre 1,5 MPa et 3,0 MPa, pour un matériau de diamètre volumique moyen (D50), ou une longueur (plus grande dimension lorsque le matériau n'est pas sphérique), inférieur(e) à 1 mm, borne exclue,
- une résistance à l'écrasement en grain, mesurée selon les normes ASTM D 4179 (2011) et ASTM D 6175 (2013), comprise entre 1,5 daN et 30 daN, de préférence comprise entre 2 daN et 20 daN, pour un matériau de diamètre volumique moyen (D50), ou une longueur (plus grande dimension lorsque le matériau n'est pas sphérique), supérieur(e) ou égal(e) à 1 mm, borne incluse.

Selon un autre aspect, la présente invention a également pour objet un procédé de préparation de l'adsorbant zéolithique décrit précédemment comprenant au moins les étapes de mélange d'au moins une zéolithe mésoporeuse, éventuellement avec un ou plusieurs additifs, avec au moins un liant, dans les proportions indiquées précédemment, et mise en forme du matériau aggloméré, selon toute méthode connue de l'homme du métier, par exemple par extrusion, pastillage, atomisation ou autres techniques d'agglomération bien connues de l'homme du métier et zéolithisation du liant d'agglomération, selon des techniques également bien connues de l'homme du métier.

Selon un mode de réalisation préféré, le procédé de l'invention comprend au moins les étapes de :

a) agglomération de cristaux d'au moins une zéolithe mésoporeuse de diamètre moyen en nombre compris entre 0,1 $\mu$m et 20 $\mu$m, de préférence entre 0,1 $\mu$m et 20 $\mu$m, de préférence entre 0,1 $\mu$m et 10 $\mu$m, de manière plus préférée entre 0,5 $\mu$m et 10 $\mu$m et plus préférentiellement encore entre 0,5 $\mu$m et 5 $\mu$m, de rapport atomique Si/Al compris entre 1 et 1,4, bornes incluses, et de surface externe mésoporeuse, définie par la méthode du t-plot décrite plus loin, comprise entre 40 $m^2.g^{-1}$ et 400 $m^2.g^{-1}$, de préférence entre 40 $m^2.g^{-1}$ et 250 $m^2.g^{-1}$, de préférence encore entre 40 $m^2.g^{-1}$ et 200 $m^2.g^{-1}$, bornes incluses, avec au moins un liant d'agglomération, éventuellement un ou plusieurs additifs, ainsi qu'avec la quantité d'eau qui permet la mise en forme du adsorbant zéolithique ;
b) séchage des agglomérats à une température comprise entre 50°C et 150°C ;
c) calcination des agglomérats de l'étape b), à une température supérieure à 150°C, pendant quelques heures ;
d) zéolithisation d'au moins une partie du liant d'agglomération liant par mise en contact des agglomérats obtenus à l'étape c) avec une solution aqueuse alcaline, éventuellement en présence d'au moins un agent structurant ;
e) étape optionnelle d'élimination de l'agent structurant éventuellement présent ;
f) éventuellement échange(s) cationique(s) des agglomérats de l'étape c) ou de l'étape d) par mise en contact avec une solution d'au moins un sel de métal alcalin ou alcalino-terreux ;
g) puis lavage et séchage des agglomérats obtenus aux étapes d) ou e) dans les conditions décrites à l'étape b), et
h) obtention de l'adsorbant zéolithique par activation des agglomérats obtenus à l'étape f) dans les conditions décrites à l'étape c).

Les cristaux de la au moins une zéolithe mésoporeuse utilisés à l'étape a) peuvent être obtenus selon diverses méthodes connues de l'homme du métier et par exemple selon les synthèses décrites dans la demande de brevet WO2007043731 ou encore par A. Inayat et coll.(Angew. Chem. Int. Ed., (2012), 51, 1962-1965).

Il est également possible de préparer lesdits cristaux par synthèse par ensemencement et/ou par ajustement des conditions opératoires de synthèse tels que le rapport $SiO_2/Al_2O_3$, la teneur en sodium et l'alcalinité du mélange de synthèse ou encore selon des procédés de post-traitement de cristaux de zéolithe conventionnels et connus de l'homme du métier.

Les procédés de post-traitements consistent généralement à éliminer des atomes du réseau zéolithique déjà formé, soit par un ou plusieurs traitements acides qui désaluminent le solide, traitement(s) suivi(s) par un ou plusieurs lavage(s) à la soude (NaOH) afin d'éliminer les résidus aluminiques formés, comme décrit par exemple par D. Verboekend et coll. (Adv. Funct. Mater., 22, (2012), pp. 916-928), soit encore par des traitements qui associent l'action d'un acide et celle d'un agent structurant qui améliorent l'efficacité du traitement acide, comme décrit par exemple dans la demande WO2013/106816.

Les procédés de synthèse directe de ces zéolithes (c'est-à-dire des procédés de synthèse autre que le post-traitement) sont préférés et font généralement intervenir un ou plusieurs agents structurants, dits encore gabarits sacrificiels.

Les gabarits sacrificiels pouvant être utilisés peuvent être de tout type connu de l'homme du métier et notamment ceux décrits dans la demande WO 2007/043731. Selon un mode de réalisation préféré, le gabarit sacrificiel est avantageusement choisi parmi les organosilanes et plus préférentiellement parmi les organosilanes et plus préférentiellement parmi le chlorure de [3-(triméthoxysilyl)propyl]octadécyldiméthylammonium, le chlorure de [3-(triméthoxysilyl)propyl]hexadécyldiméthylammonium, le chlorure de [3-(triméthoxysilyl)propyl]dodécyldiméthylammonium, le chlorure de [3-(triméthoxysilyl)propyl]octylammonium, la N-[3-(triméthoxysilyl)propyl]aniline, le 3-[2-(2-aminoéthylamino)éthylamino]propyltriméthoxysilane, la N-[3-(triméthoxysilyl)propyl]-N'-(4-vinylbenzyl)éthylènediamine, le triéthoxy-3-(2-imidazolin-1-yl)propylsilane, la 1-[3-(triméthoxysilyl)propyl]urée, la N-[3-(triméthoxysilyl)propyl]éthylènediamine, le [3-(diéthylamino)propyl]triméthoxysilane, le (3-glycidyloxypropyl)triméthoxysilane, le méthacrylate de 3-(triméthoxysilyl)propyle, le [2-(cyclohexényl)éthyl]triéthoxysilane, le dodécyltriéthoxysilane, l'hexadécyltriméthoxysilane, le (3-aminopropyl)triméthoxysilane, le (3-mercaptopropyl)triméthoxysilane, le (3-chloropropyl)triméthoxysilane, et les mélanges de deux ou plusieurs d'entre eux en toutes proportions.

Parmi les gabarits sacrificiels listés ci-dessus, on préfère tout particulièrement le chlorure de [3-(triméthoxysilyl)propyl]octadécyldiméthylammonium, ou TPOAC.

On peut également utiliser des gabarits sacrificiels de masse molaire plus élevée et par exemple les PPDA (Polymer Poly-DiallyldimethylAmmonium), PVB (PolyVinyl Butyral) et autres composés oligomères connus dans le domaine pour augmenter le diamètre des mésopores.

Selon un mode de réalisation préféré du procédé de la présente invention, on procède, à l'étape a), à l'agglomération de cristaux d'au moins une zéolithe mésoporeuse, comme décrit précédemment, préparée en présence d'un gabarit sacrificiel destiné à être éliminé.

Cette élimination peut être réalisée selon les méthodes connues de l'homme du métier, par exemple par calcination, et de manière non limitative, la calcination des cristaux de zéolithe comprenant le gabarit sacrificiel peut être effectuée sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté, à une ou des températures supérieures à 150°C, typiquement comprises entre 180°C et 800°C, préférentiellement entre 200°C et 650°C, pendant quelques heures, par exemple entre 2 et 6 heures. La nature des gaz, les rampes de montée en température et les paliers successifs de températures, leurs durées seront adaptées en fonction de la nature du gabarit sacrificiel.

L'étape supplémentaire d'élimination de l'éventuel gabarit sacrificiel peut être effectuée à tout moment au cours du procédé de préparation de l'adsorbant zéolithique de l'invention. L'élimination dudit gabarit sacrificiel peut ainsi avantageusement être effectuée par calcination des cristaux de zéolithe avant l'étape d'agglomération a), ou encore de manière concomitante avec le séchage et/ou la calcination de l'adsorbant lors des étapes b) et c).

On ne sortirait toutefois pas du cadre de l'invention si l'agglomération de l'étape a) comprenait l'agglomération de plusieurs zéolithes mésoporeuses obtenues selon des modes différents.

La quantité dudit au moins un liant d'agglomération peut varier dans de grandes proportions et est avantageusement comprise entre 5% et 30%, de préférence entre 5% et 25%, de préférence encore entre 10% et 20%, en poids de liant par rapport au poids total de zéolithe(s) et de liant, exprimé en équivalent anhydre (poids corrigé de la perte au feu).

Selon un mode de réalisation tout particulièrement préféré, le liant d'agglomération comprend au moins 80% d'une argile ou d'un mélange d'argiles zéolithisable(s), c'est-à-dire apte à être transformé en structure zéolithique dans une ou plusieurs étape(s) de zéolithisation.

On ne sortirait pas du cadre de l'invention si la au moins une zéolithe mésoporeuse utilisée à l'étape a) d'agglomération avait subi au préalable un ou des échange(s) cationique(s). Dans ce cas, il est possible de s'affranchir de l'étape f) d'échange ionique, bien que ceci ne soit pas préféré. L'étape d) de zéolithisation est conduite de sorte que la valeur de PNZ, mesurée par DRX comme indiqué plus loin, soit telle que définie précédemment.

Le séchage des agglomérats (étape b)) peut être réalisé selon toute méthode connue de l'homme du métier, et avantageusement dans un four de séchage selon des méthodes bien connues de l'art antérieur et avantageusement sous balayage gazeux, oxydant et/ou inerte, avec notamment des gaz tels que l'oxygène, l'azote, l'air, un air sec et/ou décarbonaté, un air appauvri en oxygène, éventuellement sec et/ou décarbonaté, à une température supérieure à 50°C, typiquement comprise entre 50°C et 150°C, préférentiellement entre 60°C et 80°C, pendant quelques heures.

L'étape c) de calcination des agglomérats est également réalisée selon des méthodes bien connues de l'art antérieur, et avantageusement sous balayage gazeux, oxydant et/ou inerte, avec notamment des gaz tels que l'oxygène, l'azote, l'air, un air sec et/ou décarbonaté, un air appauvri en oxygène, éventuellement sec et/ou décarbonaté, à une température supérieure à 150°C, typiquement comprise entre 180°C et 800°C, préférentiellement entre 200°C et 650°C, pendant quelques heures, par exemple de 2 à 6 heures.

De même, l'étape d) de zéolithisation est une étape maintenant bien connue de l'homme du métier qui peut être conduite selon toute méthode décrite dans l'art antérieur, la solution aqueuse alcaline utilisée pouvant être une solution aqueuse d'hydroxyde de lithium, de potassium, de sodium, ou encore une solution aqueuse de sels de lithium, de potassium, de sodium, en particulier halogénures, avantageusement chlorures, l'utilisation d'hydroxyde de sodium étant tout particulièrement préférée.

En règle générale, la concentration de la solution alcaline de zéolithisation est comprise entre 0,5 M et 5 M. La zéolithisation s'opère de préférence à chaud, à une température supérieure à la température ambiante, par exemple comprise entre la température ambiante (environ 20°C) et la température d'ébullition de la solution alcaline de zéolithisation, et par exemple à des températures de l'ordre de 80°C à 100°C. La durée du processus de zéolithisation est généralement comprise entre quelques dizaines de minutes et quelques heures, habituellement entre environ 1 heure et 8 heures.

Selon un mode de réalisation du procédé de la présente invention, l'étape d) de zéolithisation d'au moins une partie du liant d'agglomération peut être réalisée en présence d'au moins un agent structurant ou gabarit sacrificiel destiné à être éliminé selon les méthodes connues de l'homme du métier, par exemple par calcination, la présence de l'agent structurant ayant pour but de créer une certaine mésoporosité dans l'aggloméré de l'invention ainsi obtenir un aggloméré zéolithique mésoporeux.

La quantité d'agent structurant peut varier dans de grandes proportions selon le degré de mésoporosité recherché, et est avantageusement comprise entre 0,1% et 50%, de préférence entre 0,1% et 33%, de préférence encore entre 1% et 30%, avantageusement entre 5% et 30%, en poids par rapport au poids d'argile(s).

La nature de l'agent structurant ou gabarit sacrificiel peut-être de tout type connu de l'homme du métier et ce comme décrit précédemment pour la synthèse de zéolithe mésoporeuse.

L'étape optionnelle e) d'élimination de l'agent structurant éventuellement introduit lors de l'étape de zéolithisation d) visant à convertir une partie du liant d'agglomération en zéolithe mésoporeuse et/ou éventuellement non-mésoporeuse, peut être réalisée par tout moyen connu de l'homme du métier et en particulier par traitement thermique, généralement à une température supérieure à 150°C, typiquement comprise entre 180°C et 650°C, préférentiellement entre 200°C et 600°C. Dans ce cas, l'étape h) d'activation effectuée à haute température permet également l'élimination de l'agent structurant rendant ainsi avantageusement possible de ne pas réaliser l'étape e) d'élimination dudit agent structurant qui sera de fait éliminé lors de l'activation à l'étape h).

L'étape h) d'activation est une étape nécessaire pour libérer à la fois la microporosité (élimination de l'eau) et la mésoporosité (élimination de l'agent structurant, s'il n'a pas été éliminé lors de l'étape optionnelle e)). Cette étape d'activation peut être effectuée selon toute méthode de calcination connue de l'homme du métier et par exemple, et de manière non limitative et, comme décrit pour l'étape c) sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté, à une ou des températures supérieures à 150°C, typiquement comprises entre 180°C et 650°C, préférentiellement entre 200°C et 600°C, pendant quelques heures, par exemple entre 2 et 6 heures. La nature des gaz, les rampes de montée en température et les paliers successifs de températures, leurs durées seront adaptées en fonction de la nature du gabarit sacrificiel.

La taille des cristaux de zéolithes mésoporeuses utilisées à l'étape a) et des cristaux dans les adsorbants zéolithiques de l'invention est avantageusement mesurée par observation au microscope électronique à balayage (MEB) qui permet également de confirmer la présence de phase non zéolithique comprenant par exemple du liant résiduel (non converti lors de l'étape de zéolithisation) ou toute autre phase amorphe dans les adsorbants. Dans la description de la présente invention, on emploie l'appellation « diamètre moyen en nombre » ou bien « taille » pour les cristaux de zéolithe. La méthode de mesure de ces grandeurs est explicitée plus loin dans la description.

L'agglomération et la mise en forme (étape a) peuvent être réalisées selon toutes les techniques connues de l'homme de l'art, telles qu'extrusion, compactage, agglomération sur assiette granulatrice, tambour granulateur, atomisation et autres. Les proportions de liant d'agglomération et de zéolithes mises en oeuvre sont typiquement celles de l'art antérieur, c'est-à-dire comprises entre 5 parties et 30 parties en poids de liant pour 95 parties à 70 parties en poids de zéolithe. Les agglomérats issus de l'étape a), qu'ils soient sous forme de billes, d'extrudés ou autres, ont en général un diamètre volumique en nombre, ou une longueur (plus grande dimension lorsqu'ils ne sont pas sphériques), inférieur ou égal à 7 mm, de préférence compris entre 0,05 mm et 7 mm, de manière encore préférée compris entre 0,2 mm et 5 mm et plus préférentiellement entre 0,2 mm et 2,5 mm.

Lors de l'étape a), outre le ou les cristaux de zéolithe(s) et le liant, un ou plusieurs additifs peuvent également être ajoutés. Les additifs sont préférentiellement organiques, par exemple de la lignine, de l'amidon, de la carboxyméthylcellulose, des molécules tensioactives (cationiques, anioniques, non ioniques ou amphotères), destinées à faciliter la manipulation de la pâte zéolithe(s)/argile(s) par modification de la rhéologie et/ou du pouvoir collant ou à conférer aux agglomérés finaux des propriétés satisfaisantes, notamment de macroporosité. On peut citer de manière préférentielle mais non exhaustive les méthylcelluloses et leurs dérivés, les lignosulfonates, les acides polycarboxyliques et les acides de copolymères carboxyliques, leurs dérivés aminés et leurs sels, notamment les sels alcalins et les sels d'ammonium. Les additifs sont introduits à raison de 0 à 5%, de préférence de 0,1% à 2%.

Les additifs comprennent également une source de silice liquide et/ou solide, de préférence représentant de 1% à 5% de la masse totale desdits solides. La source éventuelle de silice peut être de tout type connu de l'homme du métier, spécialiste de la synthèse de zéolithes, par exemple silice colloïdale, diatomées, perlites, cendres de calcination (« fly ash » en langue anglaise), sable, ou toute autre forme de silice solide.

Selon un mode de réalisation, l'étape a) du procédé de la présente invention est effectuée en présence d'au moins un additif qui est une source de silice choisie parmi silice colloïdale, diatomées, perlites, cendres de calcination, sable, ou toute autre forme de silice solide.

Lors de la calcination (étape c) et étape h)), la nature des gaz, les rampes de montée en température et les paliers successifs de températures, ainsi que leurs durées respectives, seront adaptés en fonction de la nature de l'agent structurant éventuel à éliminer et en fonction de la nature du liant et des éventuels additifs mis en oeuvre dans le procédé de synthèse des agglomérés de l'invention.

L'adsorbant zéolithique ainsi obtenu présente de manière tout à fait inattendue des propriétés optimales, combinant à la fois :

- un fort taux de cristallinité, caractérisé par son volume microporeux et par conséquent une capacité optimale,
- une cinétique de transfert optimale, caractérisée par son volume mésoporeux, et
- des propriétés mécaniques optimales pour une utilisation dans les procédés d'adsorption et les procédés d'échange ionique en dynamique ou en statique.

La mésoporosité de l'adsorbant zéolithique selon l'invention peut être visualisée par des mésopores facilement identifiables par exemple par observation au moyen d'un microscope électronique à transmission (MET ou « TEM » en langue anglaise), comme décrit par exemple dans US7785563.

Les matériaux zéolithiques agglomérés selon la présente invention possèdent à la fois les caractéristiques des zéolithes mésoporeuses, mais aussi notamment les propriétés mécaniques des agglomérés zéolithiques conventionnels connus de l'art antérieur, c'est-à-dire où la zéolithe est non-mésoporeuse.

Plus particulièrement, les matériaux zéolithiques agglomérés de l'invention montrent qu'il est possible de maintenir la cristallinité et la mésoporosité de la zéolithe au sein d'un adsorbant zéolithique, et d'obtenir un adsorbant zéolithique aggloméré non dégradé et résistant mécaniquement. En outre le procédé de préparation des matériaux agglomérés zéolithiques à zéolithe(s) mésoporeuse(s) selon l'invention, est un procédé de mise en oeuvre aisée, rapide et économique et donc facilement industrialisable avec un minimum d'étapes de synthèse.

Ainsi et selon encore un autre aspect, la présente invention concerne l'utilisation d'au moins un adsorbant zéolithique tels qu'il vient d'être défini ou susceptible d'être obtenu selon le procédé décrit précédemment, dans tous les domaines connus où les zéolithes sont communément utilisées et en particulier pour les opérations de séparations en phase gazeuse ou en phase liquide, et tout particulièrement dans les procédés de séparation des flux gazeux ou liquides, les procédés d'adsorption modulés en pression en phase gazeuse, les procédés d'adsorption modulés en température en phase gazeuse ou liquide, les procédés d'adsorption en lit fixe sans régénération, les procédés de séparation en lits mobiles simulés.

Les exemples suivants permettent d'illustrer l'objet de l'invention, et sont fournis à titre indicatif seulement, sans toutefois être destinés en aucune façon à limiter les divers modes de réalisation de la présente invention.

Dans les exemples qui suivent, les propriétés physiques des agglomérés sont évaluées par les méthodes connues de l'homme du métier, dont les principales d'entre elles sont rappelées ci-dessous.

*Perte au feu des adsorbants zéolithiques :*

La perte au feu est déterminée en atmosphère oxydante, par calcination de l'échantillon à l'air à une température de 950°C $\pm$ 25°C, comme décrit dans la norme NF EN 196-2 (avril 2006). L'écart-type de mesure est inférieur à 0,1%.

*Mesure de la pureté et de la cristallinité des phases cristallines (zéolithiques) - Analyse qualitative et quantitative par diffraction des rayons X :*

La pureté des phases zéolithiques dans les adsorbants de l'invention est évaluée par analyse de diffraction aux rayons X, connue de l'homme du métier sous l'acronyme DRX. Cette identification est réalisée sur un appareil DRX de la marque Bruker.

Cette analyse permet d'identifier les phases cristallines présentes dans le solide analysé car chacune des structures zéolithiques possède un spectre de diffraction (ou diffractogramme) unique défini par le positionnement des pics de diffraction et par leurs intensités relatives. Les adsorbants zéolithiques agglomérés sont broyés puis étalés et lissés sur un porte échantillon par simple compression mécanique.

Les conditions d'acquisition du spectre de diffraction (ou diffractogramme) réalisé sur l'appareil D5000 Brucker sont les suivantes :

- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 tr.min$^{-1}$ ;
- plage de mesure : 3° < 2θ < 50° ;
- pas : 0,02° ;
- temps de comptage par pas : 2 secondes.

L'interprétation du spectre de diffraction (ou diffractogramme) obtenu s'effectue avec le logiciel EVA avec identification des phases à l'aide de la base ICCD PDF-2 release 2011.

*Quantité massique des fractions zéolithiques des adsorbants zéolithiques*

La quantité massique des fractions zéolithiques est mesurée par analyse par diffraction de rayons X, connue de l'homme du métier sous l'acronyme DRX. Cette analyse est réalisée sur un appareil de la marque Bruker, puis la quantité des fractions zéolithiques est évaluée à partir des intensités de pic des diffractogrammes en prenant comme référence les intensités de pic d'une référence appropriée (zéolithe de même nature chimique supposée 100% cristalline dans des conditions de traitements cationiques identiques à celles l'adsorbant considéré). Les pics, permettant de remonter à la cristallinité, sont les pics les plus intenses de la zone angulaire 2θ comprise entre 9° et 37°, par exemple pour la zéolithe FAU les pics observés dans les plages angulaires 2θ comprises respectivement entre 11° et 13°, entre 22° et 26° et entre 31° et 33°. Les pics les plus intenses de la zone angulaire 2θ sont disponibles pour chaque famille de zéolithes dans « Collection of Simulated XRD Powder Patterns for Zeolites », Editeurs : M.M.J. Treacy et J.B. Higgins, 4e édition révisée, ELSEVIER, (2001).

*Phase non zéolithique (PNZ) des adsorbants zéolithiques :*

Le taux de phase non zéolithique PNZ, par exemple le taux de liant d'agglomération résiduel (i.e. non zéolithisé) et de toute autre éventuelle phase amorphe est calculé selon l'équation suivante :

$$PNZ = 100 - \Sigma(PZ),$$

où $\Sigma(PZ)$ représente la somme des quantités des fractions zéolithiques au sens de l'invention.

*Mesure du volume microporeux et du volume mésoporeux :*

La mesure du volume microporeux est estimée par des méthodes classiques telles que les mesures des volumes de Dubinin-Raduskevitch (adsorption d'azote liquide à 77 K ou d'argon liquide à 87 K).
Le volume de Dubinin-Raduskevitch est déterminé à partir de la mesure de l'isotherme d'adsorption de gaz, tel que l'azote ou l'argon, à sa température de liquéfaction, en fonction de l'ouverture de pores de la structure zéolithique : on choisira l'argon pour la LTA et l'azote pour la FAU. Préalablement à l'adsorption, l'adsorbant zéolithique est dégazé entre 300°C et 450°C pendant une durée comprise entre 9 heures et 16 heures, sous vide ($P < 6,7.10^{-4}$ Pa). La mesure des isothermes d'adsorption est ensuite effectuée sur un appareil de type ASAP 2020 de Micromeritics, en prenant au moins 35 points de mesure à des pressions relatives de rapport P/PO compris entre 0,002 et 1. Le volume microporeux est déterminé selon Dubinin et Raduskevitch à partir de l'isotherme obtenu, en appliquant la norme ISO 15901-3 (2007). Le volume microporeux évalué selon l'équation de Dubinin et Raduskevitch s'exprime en $cm^3$ d'adsorbat liquide par gramme d'adsorbant. L'incertitude de mesure est de $\pm$ 0,003 $cm^3.g^{-1}$.
Le volume mésoporeux est déterminé par la méthode Barrett-Joyner-Halenda (méthode BJH, E. P. Barrett, L. G. Joyner, P. P. Halenda, "The Détermination of Pore Volume and Area Distributions in Porous Substances. I. Computations form Nitrogen Isotherms", J. Am. Chem. Soc., 73(1), (1951), 373-380), à partir de la branche d'adsorption de l'isotherme de physisorption d'azote à 77K.

*Mesure de la surface externe mésoporeuse ($m^2$/g) par la méthode dite du t-plot :*

La méthode de calcul dite du t-plot exploite les données de l'isotherme d'adsorption Q ads = f (P/PO) et permet de calculer la surface microporeuse. On peut en déduire la surface externe en faisant la différence avec la surface BET qui calcule la surface poreuse totale en $m^2$/g (S BET = Surface microporeuse + Surface externe mésoporeuse).
Pour calculer la surface microporeuse par la méthode t-plot, on trace la courbe Q ads ($cm^3.g^{-1}$) en fonction de t = épaisseur de la couche dépendant de la pression partielle P/PO qui se formerait sur un solide non poreux de référence (t fonction de log (P/PO) : équation de Harkins et Jura appliquée : [13,99/(0,034-log(P/P0))^0,5]. Dans l'intervalle t compris entre 0,35 nm et 0,5 nm, on peut tracer une droite qui définit une ordonnée à l'origine Q adsorbée qui permet de calculer la surface microporeuse. Si le solide n'est pas microporeux la droite passe par 0.

*Mesure de la surface externe ($m^2$/g) de l'adsorbant zéolithique :*

La surface externe de l'adsorbant zéolithique est mesurée selon la méthode décrite ci-dessus utilisant la méthode de calcul dite du t-plot en appliquant l'équation de Harkins et Jura dans l'intervalle t compris entre 0,35 nm et 0,5 nm.

*Observation de la structure mésoporeuse par Microscopie Électronique à Transmission*

Après broyage des adsorbants au mortier, la poudre obtenue est dispersée dans l'éthanol pendant 1 minute sous ultrasons. On dépose une goutte de la solution sur une grille de microscopie. On laisse sécher l'échantillon à l'ambiante.
L'observation se fait avec un microscope électronique à transmission (CM 200 de FEI) sous une tension de 120 kV.

*Granulométrie des cristaux :*

L'estimation du diamètre moyen en nombre des cristaux de zéolithe mésoporeuse utilisée à l'étape a) et des cristaux des zéolithes contenues dans les agglomérés est réalisée comme indiqué précédemment par observation au microscope électronique à balayage (MEB).

Afin d'estimer la taille des cristaux de zéolithe sur les échantillons, on effectue un ensemble de clichés à un grossissement d'au moins 5000. On mesure ensuite le diamètre d'au moins 200 cristaux à l'aide d'un logiciel dédié, par exemple le logiciel Smile View de l'éditeur LoGraMi. La précision est de l'ordre de 3%.

*Résistance à l'écrasement en lit :*

La résistance à l'écrasement d'un lit des adsorbants zéolithiques de la présente invention est caractérisée selon la méthode Shell série SMS1471-74 (Shell Method Series SMS1471-74 « Détermination of Bulk Crushing Strength of Catalysts. Compression-Sieve Method »), associée à l'appareil « BCS Tester » commercialisé par la société Vinci Technologies. Cette méthode, initialement destinée à la caractérisation de catalyseurs de taille comprise entre 3 mm et 6 mm, est basée sur l'utilisation d'un tamis de 425 $\mu$m qui va permettre notamment de séparer les fines créées lors de l'écrasement. L'utilisation d'un tamis de 425 $\mu$m reste adaptée pour des particules de diamètre supérieur ou égal à 1 mm mais doit être adapté selon la granulométrie des agglomérés que l'on cherche à caractériser.

*Résistance à l'écrasement en grains :*

Les résistances mécaniques à l'écrasement en grains sont déterminées avec un appareil « Grain Crushing strength » commercialisé par Vinci Technologies, selon les normes ASTM D 4179 et D 6175.

*Analyse chimique des adsorbants zéolithiques - rapport Si/Al et taux d'échange :*

Une analyse chimique élémentaire du produit final obtenu à l'issue des étapes a) à f) décrites précédemment, peut être réalisée selon différentes techniques analytiques connues de l'homme du métier. Parmi ces techniques, on peut citer la technique d'analyse chimique par fluorescence de rayons X telle que décrite dans la norme NF EN ISO 12677 : 2011 sur un spectromètre dispersif en longueur d'onde (WDXRF), par exemple Tiger S8 de la société Bruker. On peut également citer la méthode par ICP.

La fluorescence X est une technique spectrale non destructive exploitant la photoluminescence des atomes dans le domaine des rayons X, pour établir la composition élémentaire d'un échantillon. L'excitation des atomes généralement par un faisceau de rayons X ou par bombardement avec des électrons, génère des radiations spécifiques après retour à l'état fondamental de l'atome. Le spectre de fluorescence X a l'avantage de dépendre très peu de la combinaison chimique de l'élément, ce qui offre une détermination précise, à la fois quantitative et qualitative. On obtient de manière classique après étalonnage pour chaque oxyde une incertitude de mesure inférieure à 0,4% en poids.

D'autres méthodes d'analyse sont par exemple illustrées par les méthodes par spectrométrie d'absorption atomique (AAS) et spectrométrie d'émission atomique avec plasma induit par haute fréquence (ICP-AES) décrites dans les normes NF EN ISO 21587-3 ou NF EN ISO 21079-3 sur un appareil de type par exemple Perkin Elmer 4300DV.

Le spectre de fluorescence X a l'avantage de dépendre très peu de la combinaison chimique de l'élément, ce qui offre une détermination précise, à la fois quantitative et qualitative. On obtient de manière classique après étalonnage pour chaque oxyde $SiO_2$ et $Al_2O_3$, ainsi que les différents oxydes (tels que ceux provenant des cations échangeables, par exemple sodium), une incertitude de mesure inférieure à 0,4% en poids. La méthode ICP-AES est particulièrement adaptée pour mesurer la teneur en lithium qui permet de calculer la teneur en oxyde de lithium.

Ainsi, les analyses chimiques élémentaires décrites ci-dessus permettent à la fois de vérifier le rapport atomique Si/Al de la zéolithe utilisée au sein de l'aggloméré et le rapport atomique Si/Al du produit final obtenu à l'issue des étapes a) à h) décrites précédemment, et de vérifier la qualité de l'échange cationique optionnelle décrit à l'étape f) mais aussi permet de vérifier la teneur en sodium de l'adsorbant sous sa forme échangée sodium. Dans la description de la présente invention, l'incertitude de mesure du rapport atomique Si/Al est de $\pm$ 5%.

La qualité de l'échange ionique est liée au nombre de moles du cation considéré dans l'aggloméré zéolithique après échange. Plus précisément, le taux d'échange par un cation donné est estimé en évaluant le rapport entre le nombre de moles dudit cation et le nombre de moles de l'ensemble des cations échangeables. Les quantités respectives de chacun des cations sont évaluées par analyse chimique des cations correspondants. Par exemple, le taux d'échange par les ions sodium est estimé en évaluant le rapport entre le nombre total de cation $Na^+$ et le nombre total de cations échangeables (par exemple $Ca^{2+}$, $K^+$, $Li^+$, $Ba^{2+}$, $Cs^+$, $Na^+$, etc..), la quantité de chacun des cations étant évaluée par analyse chimique des oxydes correspondants ($Na_2O$, $CaO$, $K_2O$, $BaO$, $Li_2O$, $Cs_2O$, etc.). Cette méthode de calcul comptabilise également les éventuels oxydes présents dans le liant résiduel de l'adsorbant. Toutefois, la quantité de tels oxydes est considérée comme mineure par rapport aux oxydes provenant des cations des sites échangeables de la ou des zéolithes de l'adsorbant selon l'invention.

*Masse volumique apparente*

La masse volumique apparente est mesurée comme décrit dans la norme DIN 8948/7.6.

**Exemple** 1 : **Synthèse de zéolithe mésoporeuse de type X avec ajout de gel de nucléation et gel de croissance avec ratio TPOAC/Al$_2$O$_3$ = 0,04**

**a) Préparation du gel** de croissance dans réacteur agité avec vis d'Archimède à 300 tr/min.

Dans un réacteur en inox muni d'une double enveloppe chauffante, d'une sonde température et d'un agitateur, on prépare un gel de croissance en mélangeant une solution d'aluminate contenant 119 g d'hydroxyde de sodium (NaOH), 128 g d'alumine trihydratée (Al$_2$O$_3$, 3H$_2$O, contenant 65,2% en poids d'Al$_2$O$_3$) et 195,5 g eau à 25°C en 25 minutes avec une vitesse d'agitation de 300 tr.min$^{-1}$ dans une solution de silicate contenant 565,3 g de silicate de sodium, 55,3 g de NaOH et 1997,5 g d'eau à 25°C.

La stœchiométrie du gel de croissance est la suivante : 3,48 Na$_2$O / Al$_2$O$_3$ / 3,07 SiO$_2$ / 180 H$_2$O. L'homogénéisation du gel de croissance est réalisée sous agitation à 300 tr.min$^{-1}$, pendant 25 minutes, à 25°C.

**b) Ajout du gel de nucléation**

On ajoute au gel de croissance, à 25°C sous agitation à 300 tr.min$^{-1}$, 61,2 g de gel de nucléation (soit 2 % en poids) de composition 12 Na$_2$O/Al$_2$O$_3$/10 SiO$_2$ /180 H$_2$O préparé de la même manière que le gel de croissance, et ayant mûri pendant 1 heure à 40°C. Après 5 minutes d'homogénéisation à 300 tr.min$^{-1}$, la vitesse d'agitation est diminuée à 100 tr.min$^{-1}$ et poursuivie pendant 30 minutes.

**c) Introduction dans le milieu réactionnel de l'agent structurant**

On introduit dans le milieu réactionnel 27,3 g de solution de TPOAC à 60% dans le méthanol (MeOH) avec une vitesse d'agitation de 300 tr.min$^{-1}$ (ratio molaire TPOAC/Al$_2$O$_3$ = 0,04). On opère à 25°C une étape de maturation pendant 1 heure à 300 tr.min$^{-1}$ avant de démarrer la cristallisation.

**d) Cristallisation**

On abaisse la vitesse d'agitation à 50 tr.min$^{-1}$ et on fixe la consigne de la double enveloppe du réacteur à 80°C afin que le milieu réactionnel monte en température à 75°C en 80 minutes. Après 22 heures de palier à 75°C, on refroidit le milieu réactionnel en faisant circuler de l'eau froide dans la double enveloppe pour stopper la cristallisation.

**e) Filtration / lavage**

Les solides sont récupérés sur fritté puis lavés avec de l'eau permutée jusqu'à pH neutre.

**f) Séchage / Calcination**

Afin de caractériser le produit, le séchage est réalisé en étuve à 90°C pendant 8 heures, la perte au feu du produit séché est de 23% en poids.

La calcination du produit séché nécessaire pour libérer à la fois la microporosité (eau) et la mésoporosité en éliminant l'agent structurant est effectuée avec le profil de température suivant : 30 minutes de montée en température à 200°C, puis 1 heure de palier à 200°C, puis 3 heures de montée en température à 550°C, et 1,5 heures de palier à 550°C.

On obtient ainsi 255 g de solide équivalent anhydre de zéolithe XPH ; ce qui représente un rendement de 99 % molaire par rapport à la quantité d'aluminium engagée. Le rapport Si/Al de la zéolithe X mésoporeuse (XPH) déterminé par fluorescence X est égal à 1,24. Les caractéristiques de cette XPH préparée dans cet exemple 1 sont regroupées dans le Tableau 1 suivant :

**-- Tableau 1 --**

| | Caractéristiques | XPH (Exemple 1) |
|---|---|---|
| Synthèse | ratio molaire TPOAC/Al$_2$O$_3$ | 0,04 |
| | durée synthèse (h) | 24 |
| Isotherme adsorption d'azote à 77 K | Volume microporeux selon Dubinin-Raduskevitch (cm$^3$.g$^{-1}$) | 0,335 |
| | Surface externe mésoporeuse (m$^2$/g) | 105 |
| | Taille des mésopores (nm) | 5 à 10 |
| Spectre DRX (diffractogramme) | Phase cristalline | X pure |
| | Cristallinité X (%) | 100 |
| MEB | taille des cristaux ($\mu$m) | 1 à 3 |

La distribution de la taille des mésopores est calculée par la méthode Density Functional Theory (DFT) avec le modèle Pores cylindriques. Le pourcentage de cristallinité est calculé au moyen du logiciel TOPAS utilisant la base ICDD PDF-2, 2011.

**Exemple 2** : **Préparation d'agglomérés de zéolithe X mésoporeuse, en présence de liant zéolithisable**

Dans ce qui suit les masses données sont exprimées en équivalent anhydre.

On prépare un mélange homogène constitué de 1600 g de cristaux de zéolithe X mésoporeuse obtenue à l'exemple 1, de 350 g de kaolin, de 130 g de silice colloïdale vendue sous la dénomination commerciale de Klebosol® 30 (contenant 30% en poids de SiO$_2$ et 0,5% de Na$_2$O) ainsi que de la quantité d'eau qui permet l'extrusion du mélange. La perte au feu de la pâte avant extrusion est de 44%.

On forme des extrudés de 1,6 mm de diamètre. Les extrudés sont séchés pendant une nuit en étuve ventilée à 80°C. Ils sont ensuite calcinés pendant 2 h à 550°C sous balayage à l'azote, puis 2 h à 550°C sous balayage à l'air sec décarbonaté.

La résistance mécanique à l'écrasement sur grain des extrudés de zéolithe X mésoporeuse est de 2,6 daN. Leur masse volumique apparente est de 0,64 g.cm$^{-3}$.

Le volume de Dubinin-Raduskevitch mesuré à partir de l'isotherme d'azote est de 0,269 cm$^3$.g$^{-1}$. La teneur en phase non zéolithique évaluée par DRX est de 20% en poids par rapport au poids total de l'adsorbant. La surface externe mesurée à partir de l'isotherme d'adsorption d'azote est de 110 m$^2$.g$^{-1}$ et le volume mésoporeux est de 0,18 cm$^3$.g$^{-1}$.

**Exemple 3** : **Préparation d'adsorbants zéolithiques selon l'invention**

Les extrudés de l'exemple 2 sont soumis à un traitement de zéolithisation.

À cet effet, 200 g de ces extrudés sont placés dans un réacteur en verre muni d'une double enveloppe régulée à une température de 100°C $\pm$ 1°C, puis on ajoute 1,5 L d'une solution aqueuse d'hydroxyde de sodium de concentration 1 M et on laisse le milieu réactionnel sous agitation pendant une durée 3 heures.

On procède ensuite au lavage des extrudés en 3 opérations successives de lavage à l'eau suivi de la vidange du réacteur. On s'assure de l'efficacité du lavage en mesurant le pH final des eaux de lavage qui doit être compris entre 10,0 et 10,5.

La résistance mécanique à l'écrasement sur grain des extrudés selon l'invention est de 3,0 daN. Leur masse volumique apparente est de 0,65 g.cm$^{-3}$. Le volume de Dubinin-Raduskevitch mesuré à partir de l'isotherme d'azote est de 0,322 cm$^3$.g$^{-1}$.

L'analyse DRX ne montre pas de phase autre que la phase faujasite après zéolithisation. La teneur en phase non zéolithique évaluée par DRX est de 4% en poids par rapport au poids total de l'adsorbant selon l'invention. La surface externe mesurée à partir de l'isotherme d'adsorption d'azote est de 50 m$^2$.g$^{-1}$ et le volume mésoporeux est de 0,07 cm$^3$.g$^{-1}$. On observe ainsi que le matériau zéolithique aggloméré selon l'invention comprenant une zéolithe X mésoporeuse présente des caractéristiques mécaniques et de volume microporeux supérieures à celles obtenues pour des adsorbants non zéolithisés (cf. Exemple comparatif 2 où le liant n'a pas subi de zéolithisation).

Il est ainsi tout à fait remarquable de noter que la présente invention permet de disposer de matériaux zéolithiques agglomérés combinant à la fois les propriétés des zéolithes mésoporeuses, les propriétés liées à la microporosité et les propriétés mécaniques des agglomérés zéolithiques connus jusqu'à présent. Il est ainsi possible d'envisager sans problème l'utilisation des matériaux zéolithiques agglomérés de l'invention dans tous les domaines d'applications industriels tels que la catalyse, la séparation, l'adsorption, et autres.

**Revendications**

1.  Adsorbant zéolithique possédant les caractéristiques suivantes :

    - la surface externe, mesurée par adsorption d'azote, est comprise entre 20 $m^2.g^{-1}$, et 70 $m^2.g^{-1}$, de préférence entre 20 $m^2.g^{-1}$ et 60 $m^2.g^{-1}$, de préférence encore entre 30 $m^2.g^{-1}$ et 60 $m^2.g^{-1}$, mieux encore entre 40 $m^2.g^{-1}$, et 60 $m^2.g^{-1}$, bornes incluses,
    - le volume mésoporeux ($V_{méso}$) mesuré par adsorption d'azote, est tel que 0 < Vméso ≤ 0,20 $cm^3.g^{-1}$, de préférence 0 < Vméso ≤ 0,10 $cm^3.g^{-1}$,
    - la teneur en phase non zéolithique (PNZ) est telle que 0 < PNZ ≤ 6%, de préférence 0,5% ≤ PNZ ≤ 6%, mieux encore, 1% ≤ PNZ ≤ 6%, de préférence encore 2% ≤ PNZ ≤ 6%, avantageusement 3% ≤ PNZ ≤ 6%, en poids par rapport au poids total dudit adsorbant, et
    - au moins une des dimensions est supérieure ou égale à 30 $\mu$m, de préférence supérieure ou égale à 50 $\mu$m, de préférence encore supérieure ou égale à 80 $\mu$m,

    chacune des mesures étant effectuée sur l'adsorbant zéolithique dans sa forme échangée au sodium.

2.  Adsorbant zéolithique selon la revendication 1, dont les sites cationiques échangeables sont occupés par les ions des groupes IA, IIA, IIIA, IIIB du tableau périodique des éléments, les ions trivalents des éléments de la série des lanthanides, l'ion zinc (II), l'ion cuivre (II), l'ion chrome (III), l'ion fer (III), l'ion ammonium, l'ion hydronium ou les mélanges de deux ou plusieurs d'entre eux, en toutes proportions.

3.  Adsorbant zéolithique selon la revendication 1 ou la revendication 2, dont les sites cationiques échangeables sont occupés par un ou plusieurs des ions choisis parmi hydronium, lithium, sodium, potassium, césium, magnésium, calcium, strontium, baryum, praséodyme, et lanthane, de préférence encore parmi cations hydronium, lithium, sodium, potassium, césium, calcium, baryum, et les mélanges de deux ou plusieurs d'entre eux en toutes proportions.

4.  Adsorbant zéolithique selon l'une quelconque des revendications précédentes, présentant, sous sa forme échangée au sodium, une masse volumique apparente comprise entre 0,4 $g.cm^{-3}$ et 1,0 $g.cm^{-3}$, de préférence entre 0,5 $g.cm^{-3}$ et 0,9 $g.cm^{-3}$, bornes incluses, ladite masse volumique apparente étant mesurée comme décrit dans la norme DIN 8948/7.6.

5.  Adsorbant zéolithique selon l'une quelconque des revendications précédentes comprenant au moins une zéolithe mésoporeuse choisie parmi les zéolithes mésoporeuses de structure LTA, EMT et FAU de rapport atomique Si/Al compris entre 1 et 5, de préférence de structure LTA et FAU de rapport atomique Si/Al compris entre 1 et 1,4, bornes incluses, et de préférence parmi les zéolithes mésoporeuses de structure FAU de type X, MSX et LSX.

6.  Adsorbant zéolithique selon la revendication 5, dans lequel ladite au moins une zéolithe mésoporeuse se présente sous forme de cristaux dont le diamètre moyen en nombre, mesuré au microscope électronique à balayage (MEB), est inférieur à 20 $\mu$m, de préférence compris entre 0,1 $\mu$m et 20 $\mu$m, de préférence compris entre 0,1 et 10 $\mu$m, de préférence compris entre 0,5 $\mu$m et 10 $\mu$m, de manière plus préférée compris entre 0,5 $\mu$m et 5 $\mu$m, bornes incluses.

7.  Adsorbant zéolithique selon l'une quelconque des revendications précédentes, dans lequel les cristaux de la (ou des) zéolithe(s), sont agglomérés avec un liant comprenant, et de préférence consistant en, une argile zéolithisable seule ou en mélange avec une ou plusieurs autres argiles zéolithisables ou non zéolithisables, de préférence zéolithisables.

8.  Adsorbant zéolithique selon l'une quelconque des revendications précédentes, dans lequel les cristaux de la (ou des) zéolithe(s), sont agglomérés avec un liant comprenant, et de préférence consistant en, une argile choisie parmi les kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions, et de préférence parmi les kaolins, kaolinites, nacrites, dickites, halloysites, illites et métakaolins, ainsi que les mélanges de deux ou plusieurs d'entre elles en toutes proportions.

9. Adsorbant zéolithique selon l'une quelconque des revendications précédentes, présentant :

   - une résistance à l'écrasement en lit (REL) mesurée selon la norme ASTM 7084-04 comprise entre 1,0 MPa et 3,5 MPa, de préférence entre 1,2 MPa et 3,5 MPa, de préférence encore entre 1,5 MPa et 3,0 MPa, pour un matériau de diamètre volumique moyen (D50), ou une longueur (plus grande dimension lorsque le matériau n'est pas sphérique), inférieur(e) à 1 mm, borne exclue,
   - une résistance à l'écrasement en grain, mesurée selon les normes ASTM D 4179 (2011) et ASTM D 6175 (2013), comprise entre 1,5 daN et 30 daN, de préférence comprise entre 2 daN et 20 daN, pour un matériau de diamètre volumique moyen (D50), ou une longueur (plus grande dimension lorsque le matériau n'est pas sphérique), supérieur(e) ou égal(e) à 1 mm, borne incluse.

10. Procédé de préparation d'un adsorbant zéolithique selon l'une quelconque des revendications 1 à 9, comprenant au moins les étapes de :

   a) agglomération de cristaux d'au moins une zéolithe mésoporeuse de diamètre moyen en nombre compris entre 0,1 $\mu$m et 20 $\mu$m, de préférence entre 0,1 $\mu$m et 20 $\mu$m, de préférence entre 0,1 $\mu$m et 10 $\mu$m, de manière plus préférée entre 0,5 $\mu$m et 10 $\mu$m et plus préférentiellement encore entre 0,5 $\mu$m et 5 $\mu$m, de rapport atomique Si/Al compris entre 1 et 1,4, bornes incluses, et de surface externe mésoporeuse, définie par la méthode du t-plot, comprise entre 40 m$^2$.g$^{-1}$ et 400 m$^2$.g$^{-1}$, de préférence entre 40 m$^2$.g$^{-1}$ et 250 m$^2$.g$^{-1}$, de préférence encore entre 40 m$^2$.g$^{-1}$ et 200 m$^2$.g$^{-1}$, bornes incluses, avec au moins un liant d'agglomération, éventuellement un ou plusieurs additifs, ainsi qu'avec la quantité d'eau qui permet la mise en forme du adsorbant zéolithique ;
   b) séchage des agglomérats à une température comprise entre 50°C et 150°C ;
   c) calcination des agglomérats de l'étape b), à une température supérieure à 150°C, pendant quelques heures ;
   d) zéolithisation d'au moins une partie du liant d'agglomération liant par mise en contact des agglomérats obtenus à l'étape c) avec une solution aqueuse alcaline, éventuellement en présence d'au moins un agent structurant ;
   e) étape optionnelle d'élimination de l'agent structurant éventuellement présent ;
   f) éventuellement échange(s) cationique(s) des agglomérats de l'étape c) ou de l'étape d) par mise en contact avec une solution d'au moins un sel de métal alcalin ou alcalino-terreux ;
   g) puis lavage et séchage des agglomérats obtenus aux étapes d) ou e) dans les conditions décrites à l'étape b), et
   h) obtention de l'adsorbant zéolithique par activation des agglomérats obtenus à l'étape f) dans les conditions décrites à l'étape c).

11. Procédé selon la revendication 10, dans lequel l'étape d) de zéolithisation d'au moins une partie du liant d'agglomération est réalisée en présence d'au moins un agent structurant.

12. Procédé selon la revendication 11, dans lequel l'agent structurant est le chlorure de [3-(triméthoxysilyl)propyl]octadécyldiméthylammonium.

13. Procédé selon l'une quelconque des revendications 10 à 12, dans lequel l'étape a) est effectuée en présence d'au moins un additif qui est une source de silice choisie parmi silice colloïdale, diatomées, perlites, cendres de calcination, sable, ou toute autre forme de silice solide.

14. Utilisation d'au moins un adsorbant zéolithique selon l'une quelconque des revendications 1 à 9 ou susceptible d'être obtenu selon le procédé de l'une quelconque des revendications 10 à 13, pour les opérations de séparations en phase gazeuse ou en phase liquide, et tout particulièrement dans les procédés de séparation des flux gazeux ou liquides, les procédés d'adsorption modulés en pression en phase gazeuse, les procédés d'adsorption modulés en température en phase gazeuse ou liquide, les procédés d'adsorption en lit fixe sans régénération, les procédés de séparation en lits mobiles simulés.

**Patentansprüche**

1. Zeolith-Adsorptionsmittel mit den folgenden Eigenschaften:

   - die durch Stickstoffadsorption gemessene externe Oberfläche liegt zwischen 20 m$^2$.g$^{-1}$ und 70 m$^2$.g$^{-1}$, vorzugsweise zwischen 20 m$^2$.g$^{-1}$ und 60 m$^2$.g$^{-1}$, weiter bevorzugt zwischen 30 m$^2$.g$^{-1}$ und 60 m$^2$.g$^{-1}$, noch besser zwischen 40 m$^2$.g$^{-1}$ und 60 m$^2$.g$^{-1}$, wobei die Grenzen eingeschlossen sind,

- das durch Stickstoffadsorption gemessene Mesoporenvolumen ($V_{meso}$) ist derart, dass $0 < V_{meso} \leq 0{,}20$ $cm^3.g^{-1}$, vorzugsweise $0 < V_{meso} \leq 0{,}10$ $cm^3.g^{-1}$,
- der Gehalt an Nicht-Zeolith-Phase (NZP) ist derart, dass $0 < NZP \leq 6$ Gew.-%, vorzugsweise $0{,}5$ Gew.-% $\leq NZP \leq 6$ Gew.-%, noch besser $1$ Gew.-% $\leq NZP \leq 6$ Gew.-%, weiter bevorzugt $2$ Gew.-% $\leq NZP \leq 6$ Gew.-%, vorteilhafterweise $3$ Gew.-% $\leq NZP \leq 6$ Gew.- %, bezogen auf das Gesamtgewicht des Adsorptionsmittels, und
- mindestens eine der Abmessungen ist größer oder gleich 30 $\mu$m, vorzugsweise größer oder gleich 50 $\mu$m, weiter bevorzugt größer oder gleich 80 $\mu$m,

wobei jede der Messungen an dem Zeolith-Adsorptionsmittel in seiner natriumausgetauschten Form durchgeführt wird.

2. Zeolith-Adsorptionsmittel nach Anspruch 1, dessen austauschbare kationische Zentren durch die Ionen der Gruppen IA, IIA, IIIA und IIIB des Periodensystems der Elemente, die dreiwertigen Ionen der Elemente der Lanthanidenreihe, das Zink(II)-Ion, das Kupfer(II)-Ion, das Chrom(III)-Ion, das Eisen(III)-Ion, das Ammoniumion, das Hydroniumion oder Mischungen von zwei oder mehr davon in beliebigen Anteilen besetzt sind.

3. Zeolith-Adsorptionsmittel nach Anspruch 1 oder Anspruch 2, dessen austauschbare kationische Zentren durch ein oder mehrere der aus Hydronium, Lithium, Natrium, Kalium, Caesium, Magnesium, Calcium, Strontium, Barium, Praseodym und Lanthan, weiter bevorzugt aus Hydronium-, Lithium-, Natrium-, Kalium-, Caesium-, Calcium- und Barium-Kationen, und Mischungen von zwei oder mehr davon in beliebigen Anteilen ausgewählten Ionen besetzt sind.

4. Zeolith-Adsorptionsmittel nach einem der vorhergehenden Ansprüche, das in seiner natriumausgetauschten Form eine Rohdichte zwischen $0{,}4$ $g.cm^{-3}$ und $1{,}0$ $g.cm^{-3}$, vorzugsweise zwischen $0{,}5$ $g.cm^{-3}$ und $0{,}9$ $g.cm^{-3}$, aufweist, wobei die Grenzen eingeschlossen sind, wobei die Rohdichte wie in der DIN-Norm 8948/7.6 gemessen wird.

5. Zeolith-Adsorptionsmittel nach einem der vorhergehenden Ansprüche, umfassend mindestens einen mesoporösen Zeolith, der aus den mesoporösen Zeolithen der LTA-, EMT- und FAU-Struktur mit einem Si/Al-Atomverhältnis zwischen 1 und 5, vorzugsweise der LTA- und FAU-Struktur mit einem Si/Al-Atomverhältnis zwischen 1 und 1,4, wobei die Grenzen eingeschlossen sind, und vorzugsweise aus mesoporösen Zeolithen der FAU-Struktur vom Typ X, MSX und LSX ausgewählt ist.

6. Zeolith-Adsorptionsmittel nach Anspruch 5, wobei der mindestens eine mesoporöse Zeolith in Form von Kristallen vorliegt, deren mit dem Rasterelektronenmikroskop (REM) gemessener zahlenmittlerer Durchmesser weniger als 20 $\mu$m beträgt und vorzugsweise zwischen 0,1 $\mu$m und 20 $\mu$m, vorzugsweise zwischen 0,1 und 10 $\mu$m, vorzugsweise zwischen 0,5 $\mu$m und 10 $\mu$m und noch weiter bevorzugt zwischen 0,5 $\mu$m und 5 $\mu$m liegt, wobei die Grenzen eingeschlossen sind.

7. Zeolith-Adsorptionsmittel nach einem der vorhergehenden Ansprüche, wobei die Kristalle des Zeoliths (bzw. der Zeolithe) mit einem Bindemittel, das einen Ton, der aus einem zeolithisierbaren Ton alleine oder als Mischung mit einem oder mehreren anderen zeolithisierbaren Tonen oder nicht zeolithisierbaren Tonen, vorzugsweise zeolithisierbaren Tonen, ausgewählt ist, umfasst und vorzugsweise daraus besteht, agglomeriert sind.

8. Zeolith-Adsorptionsmittel nach einem der vorhergehenden Ansprüche, wobei die Kristalle des Zeoliths (bzw. der Zeolithe) mit einem Bindemittel, das einen Ton, der aus Kaolinen, Kaoliniten, Nacriten, Dickiten, Halloysiten, Attapulgiten, Sepiolithen, Montmorilloniten, Bentoniten, Illiten und Metakaolinen sowie Mischungen von zwei oder mehr davon in beliebigen Anteilen und vorzugsweise aus Kaolinen, Kaoliniten, Nacriten, Dickiten, Halloysiten, Illiten und Metakaolinen sowie Mischungen von zwei oder mehr davon in beliebigen Anteilen ausgewählt ist, umfasst und vorzugsweise daraus besteht, agglomeriert sind.

9. Zeolith-Adsorptionsmittel nach einem der vorhergehenden Ansprüche mit:

- einer gemäß ASTM-Norm 7084-04 gemessenen Druckfestigkeit im Bett (Bulk Crushing Strength, BCS) zwischen 1,0 MPa und 3,5 MPa, vorzugsweise zwischen 1,2 MPa und 3,5 MPa, noch weiter bevorzugt zwischen 1,5 MPa und 3,0 MPa, für ein Material mit einem mittleren Volumendurchmesser (D50) oder einer Länge (größte Abmessung, wenn das Material nicht kugelförmig ist) von weniger als 1 mm, wobei die Grenze ausgeschlossen ist,
- einer gemäß ASTM-Norm D4179 (2011) und ASTM-Norm D 6175 (2013) gemessenen Druckfestigkeit im Korn (Grain Crushing Strength) zwischen 1,5 daN und 30 daN, vorzugsweise zwischen 2 daN und 20 daN, für ein Material mit einem mittleren Volumendurchmesser (D50) oder einer Länge (größte Abmessung, wenn das Material nicht kugelförmig ist) größer oder gleich 1 mm, wobei die Grenze eingeschlossen ist.

**10.** Verfahren zur Herstellung eines Zeolith-Adsorptionsmittels nach einem der Ansprüche 1 bis 9, das mindestens folgende Schritte umfasst:

a) Agglomeration von Kristallen von mindestens einem mesoporösen Zeolith mit einem zahlenmittleren Durchmesser zwischen 0,1 $\mu$m und 20 $\mu$m, vorzugsweise zwischen 0,1 $\mu$m und 20 $\mu$m, vorzugsweise zwischen 0,1 $\mu$m und 10 $\mu$m, weiter bevorzugt zwischen 0,5 $\mu$m und 10 $\mu$m und noch weiter bevorzugt zwischen 0,5 $\mu$m und 5 $\mu$m, einem Si/Al-Atomverhältnis zwischen 1 und 1,4, wobei die Grenzen eingeschlossen sind, und einer durch die t-Plot-Methode definierten mesoporösen externen Oberfläche zwischen 40 $m^2.g^{-1}$ und 400 $m^2.g^{-1}$, vorzugsweise zwischen 40 $m^2.g^{-1}$ und 250 $m^2.g^{-1}$, weiter bevorzugt zwischen 40 $m^2.g^{-1}$ und 200 $m^2.g^{-1}$, wobei die Grenzen eingeschlossen sind, mit mindestens einem Agglomerationsbindemittel, gegebenenfalls einem oder mehreren Additiven sowie mit der Wassermenge, die das Formen des Zeolith-Adsorptionsmittels erlaubt;
b) Trocknung der Agglomerate bei einer Temperatur zwischen 50 °C und 150 °C;
c) Calcinierung der Agglomerate aus Schritt b) bei einer Temperatur über 150 °C über einen Zeitraum von einigen Stunden;
d) Zeolithisierung mindestens eines Teils des Agglomerationsbindemittels durch Inkontaktbringen der in Schritt c) erhaltenen Agglomerate mit einer alkalischen wässrigen Lösung, gegebenenfalls in Gegenwart mindestens eines Strukturbildners;
e) den fakultativen Schritt der Entfernung des gegebenenfalls vorliegenden Strukturbildners;
f) gegebenenfalls Kationenaustausch(e) der Agglomerate aus Schritt c) oder Schritt d) durch Inkontaktbringen mit einer Lösung mindestens eines Alkalimetall- oder Erdalkalimetallsalzes;
g) dann Waschen und Trocknung der in Schritt d) oder e) erhaltenen Agglomerate unter den in Schritt b) beschriebenen Bedingungen und
h) Erhalt des Zeolith-Adsorptionsmittels durch Aktivierung der in Schritt f) erhaltenen Agglomerate unter den in Schritt c) beschriebenen Bedingungen.

**11.** Verfahren nach Anspruch 10, wobei Schritt d) der Zeolithisierung mindestens eines Teils des Agglomerationsbindemittels in Gegenwart mindestens eines Strukturbildners durchgeführt wird.

**12.** Verfahren nach Anspruch 11, wobei es sich bei dem Strukturbildner um [3-(Trimethoxysilyl)propyl]octa-decyldimethylammoniumchlorid handelt.

**13.** Verfahren nach einem der Ansprüche 10 bis 12, wobei Schritt a) in Gegenwart von mindestens einem Additiv, bei dem es sich um eine Quelle von Siliciumdioxid, die aus kolloidalem Siliciumdioxid, Diatomeenerden, Perliten, Flugasche, Sand oder einer beliebigen anderen Form von festem Siliciumdioxid ausgewählt ist, handelt, durchgeführt wird.

**14.** Verwendung mindestens eines Zeolith-Adsorptionsmittels nach einem der Ansprüche 1 bis 9 oder eines gemäß dem Verfahren nach einem der Ansprüche 10 bis 13 erhältlichen Zeolith-Adsorptionsmittels für Trennungen in der Gasphase oder in der Flüssigphase und ganz speziell bei Verfahren zur Trennung von Gas- oder Flüssigkeitsströmen, Druckwechseladsorptionsverfahren in der Gasphase, Temperaturwechseladsorptionsverfahren in der Gas- oder Flüssigphase, Festbett-Adsorptionsverfahren ohne Regeneration und Trennverfahren in simulierten Fließbetten.

## Claims

**1.** Zeolite adsorbent having the following characteristics:

- the external surface area, measured by nitrogen adsorption, is between 20 $m^2.g^{-1}$ and 70 $m^2.g^{-1}$, preferably between 20 $m^2.g^{-1}$ and 60 $m^2.g^{-1}$, more preferably between 30 $m^2.g^{-1}$ and 60 $m^2.g^{-1}$, even better still between 40 $m^2.g^{-1}$ and 60 $m^2.g^{-1}$, limits included,
- the mesopore volume ($V_{meso}$) is such that $0 < V_{meso} \leq 0.20$ $cm^3.g^{-1}$, preferably $0 < V_{meso} \leq 0.10$ $cm^3.g^{-1}$, measured by nitrogen adsorption,
- the content of non-zeolite phase (NZP) is such that $0 < NZP \leq 6\%$, preferably $0.5\% \leq NZP \leq 6\%$, even better

still 1% ≤ NZP ≤ 6%, more preferably 2% ≤ NZP ≤ 6%, advantageously 3% ≤ NZP ≤ 6%, by weight relative to the total weight of said adsorbent, and
- at least one of the dimensions is greater than or equal to 30 $\mu$m, preferably greater than or equal to 50 $\mu$m, more preferably greater than or equal to 80 $\mu$m,

each of the measurements being carried out on the zeolite adsorbent in its sodium-exchanged form.

2. Zeolite adsorbent according to Claim 1, of which the exchangeable cationic sites are occupied by the ions of groups IA, IIA, IIIA and IIIB of the periodic table of elements, the trivalent ions of the elements of the lanthanide series, the zinc(II) ion, the copper(II) ion, the chromium(III) ion, the iron(III) ion, the ammonium ion, the hydronium ion or mixtures of two or more of them, in any proportions.

3. Zeolite adsorbent according to Claim 1 or Claim 2, of which the exchangeable cationic sites are occupied by one or more of the ions chosen from hydronium, lithium, sodium, potassium, cesium, magnesium, calcium, strontium, barium, praseodymium and lanthanum, more preferably from hydronium, lithium, sodium, potassium, cesium, calcium and barium cations, and mixtures of two or more of them in any proportions.

4. Zeolite adsorbent according to any one of the preceding claims, having, in its sodium-exchanged form, a bulk density of between 0.4 g.cm$^{-3}$ and 1.0 g.cm$^{-3}$, preferably between 0.5 g.cm$^{-3}$ and 0.9 g.cm$^{-3}$, limits included, said bulk density being measured as described in standard DIN 8948/7.6.

5. Zeolite adsorbent according to any one of the preceding claims, comprising at least one mesoporous zeolite chosen from the mesoporous zeolites of LTA, EMT and FAU structure with an Si/Al atomic ratio of between 1 and 5, preferably of LTA and FAU structure with an Si/Al atomic ratio of between 1 and 1.4, limits included, and preferably from mesoporous zeolites of FAU structure of type X, MSX and LSX.

6. Zeolite adsorbent according to Claim 5, in which said at least one mesoporous zeolite is in the form of crystals of which the number-average diameter, measured with a scanning electron microscope (SEM), is less than 20 $\mu$m, preferably between 0.1 $\mu$m and 20 $\mu$m, preferably between 0.1 and 10 $\mu$m, preferably between 0.5 $\mu$m and 10 $\mu$m, more preferably between 0.5 $\mu$m and 5 $\mu$m, limits included.

7. Zeolite adsorbent according to any one of the preceding claims, in which the crystals of the zeolite(s) are agglomerated with a binder comprising, and preferably consisting of, a zeolitizable clay alone or as a mixture with one or more other zeolitizable or non-zeolitizable clays, preferably zeolitizable clays.

8. Zeolite adsorbent according to any one of the preceding claims, in which the crystals of the zeolite(s) are agglomerated with a binder comprising, and preferably consisting of, a clay chosen from kaolins, kaolinites, nacrites, dickites, halloysites, attapulgites, sepiolites, montmorillonites, bentonites, illites and metakaolins, and also mixtures of two or more of them in any proportions, and preferably from kaolins, kaolinites, nacrites, dickites, halloysites, illites and metakaolins, and also mixtures of two or more of them in any proportions.

9. Zeolite adsorbent according to any one of the preceding claims, having:

- a bulk crushing strength (BCS) measured according to standard ASTM 7084-04 of between 1.0 MPa and 3.5 MPa, preferably between 1.2 MPa and 3.5 MPa, more preferably between 1.5 MPa and 3.0 MPa, for a material with a mean volume diameter (D50), or a length (largest dimension when the material is not spherical), of less than 1 mm, limit excluded,
- a grain crushing strength, measured according to standards ASTM D 4179 (2011) and ASTM D 6175 (2013), of between 1.5 daN and 30 daN, preferably of between 2 daN and 20 daN, for a material with a mean volume diameter (D50), or a length (largest dimension when the material is not spherical), of greater than or equal to 1 mm, limit included.

10. Process for preparing a zeolite adsorbent according to any one of Claims 1 to 9, comprising at least the steps of:

a) agglomeration of crystals of at least one mesoporous zeolite with a number-average diameter of between 0.1 $\mu$m and 20 $\mu$m, preferably between 0.1 $\mu$m and 20 $\mu$m, preferably between 0.1 $\mu$m and 10 $\mu$m, more preferably between 0.5 $\mu$m and 10 $\mu$m and even more preferentially between 0.5 $\mu$m and 5 $\mu$m, with an Si/Al atomic ratio of between 1 and 1.4, limits included, and with a mesoporous external surface area, defined by the t-plot method, of between 40 $m^2.g^{-1}$ and 400 $m^2.g^{-1}$, preferably between 40 $m^2.g^{-1}$ and 250 $m^2.g^{-1}$, more preferably between 40 $m^2.g^{-1}$ and 200 $m^2.g^{-1}$, limits included, with at least one agglomeration binder, optionally one or more additives, and also with the amount of water which allows the shaping of the zeolite adsorbent;

**b)** drying of the agglomerates at a temperature of between 50°C and 150°C;

**c)** calcination of the agglomerates of step b), at a temperature above 150°C, for a few hours;

**d)** zeolitization of at least one part of the agglomeration binder by bringing the agglomerates obtained in step c) into contact with an alkaline aqueous solution, optionally in the presence of at least one structuring agent;

**e)** optional step of removal of the structuring agent optionally present;

**f)** optionally cation exchange(s) of the agglomerates of step c) or of step d) by bringing into contact with a solution of at least one alkali metal salt or alkaline-earth metal salt;

**g**) then washing and drying of the agglomerates obtained in step d) or e) under the conditions described in step b), and

**h**) production of the zeolite adsorbent by activation of the agglomerates obtained in step f) under the conditions described in step c).

11. Process according to Claim 10, in which step d) of zeolitization of at least one part of the agglomeration binder is carried out in the presence of at least one structuring agent.

12. Process according to Claim 11, in which the structuring agent is [3-(trimethoxysilyl)propyl]octadecyldimethylammonium chloride.

13. Process according to any one of Claims 10 to 12, in which step a) is carried out in the presence of at least one additive which is a source of silica chosen from colloidal silica, diatomaceous earths, perlites, fly ash, sand, or any other form of solid silica.

14. Use of at least one zeolite adsorbent according to any one of Claims 1 to 9 or capable of being obtained according to the process of any one of Claims 10 to 13, for gas-phase or liquid-phase separation operations, and quite particularly in processes for separating gas or liquid streams, gas-phase pressure swing adsorption processes, gas- or liquid-phase temperature swing adsorption processes, fixed-bed adsorption processes without regeneration, and simulated mobile-bed separation processes.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3556725 A
- US 8486369 B
- US 20130183229 A
- US 20130183231 A

- WO 2013106816 A
- WO 2007043731 A
- EP 2592049 A
- US 7785563 B

**Littérature non-brevet citée dans la description**

- *Nature,* 1992, vol. 359, 710-712
- **FENG-SHOU XIAO et al.** Hierarchically Structured Porous Materials. Wiley-VCH Verlag GmbH & Co. KGaA, 2012, 435-455
- **R. RYOO.** *Nature Materials,* 2006, vol. 5, 718
- **A. INAYAT.** *Angew. Chem. Int. Ed.,* 2012, vol. 51, 1962-1965
- *MICROPOROUS AND MESOPOROUS MATERI-ALS,* 2010, vol. 132 (3), 428-434

- **D. VERBOEKEND.** *Adv. Funct. Mater.,* 2012, vol. 22, 916-928
- Collection of Simulated XRD Powder Patterns for Ze-olites. ELSEVIER, 2001
- **E. P. BARRETT ; L. G. JOYNER ; P. P. HALENDA.** The Détermination of Pore Volume and Area Distributions in Porous Substances. I. Computations form Nitrogen Isotherms. *J. Am. Chem. Soc.,* 1951, vol. 73 (1), 373-380